# EUROPEAN PATENT APPLICATION

(11) **EP 1 728 440 A1**
(43) Date of publication of application: **06.12.2006**
(21) Application number: 06114921.7
(22) Date of filing: 02.06.2006
(51) Int. Cl.: A23L 1/00, A23G 3/00

(54) **Barrier layer for desserts**

(30) Priority: 03.06.2005 NL 1029185
(71) Applicant: Campina Nederland Holding B.V., 5301 LB Zaltbommel (NL)
(72) Inventor: Voss, Davy Wilhelmus Cornelis Maria, 5281 HC, Boxtel (NL); Kloek, William, 5467 BR, Veghel (NL); Van de Ven, Martinus Johannes Maria, 6671 GK, Zetten (NL)
(74) Representative: van Westenbrugge, Andries

(57) **Abstract**

The invention relates to a dessert comprising a first food component with a water activity of at least 0.7 and a barrier layer that is in contact with the first food component and contains a water-in-oil emulsion, wherein the amount of oil in the barrier layer is 30 -90 wt% of the total barrier layer and wherein the barrier layer has a solid fat content (SFC) value according to ISO 8292 at 25 °C, i.e. the percentage of solid fats in the oil fraction at 25 °C, of less than 5 %. This barrier layer is free from defects and can thus be so thin that - if desired - the layer is imperceptible visually and/or organoleptically for the consumer. The layer can thus be used as a robust, impenetrable layer for a dessert in order to improve the shelf life, or for combination desserts where migration of water, acid, sugar, aromas, colorants and flavourings between the different components plays a role.

## Description

### BACKGROUND OF THE INVENTION

The present invention relates to a dessert with a barrier layer, in particular a dessert that comprises a combination of food components with a barrier layer as intermediate layer. The invention further relates to a method for preparing such a dessert.

In the dessert world there is a wish to combine different food components with a range of properties with one another in a single compartment pack in order to create in this way a visually attractive product with different taste sensations. For the optimum taste sensation the intention is that these components mix as little as possible with one another and preferable that they can stay separate stored in the pack over a prolonged period of time.

With many interesting combinations of food components, in particular food components such as yoghurt, custard, milk, buttermilk, mousse, curd cheese, Bavarian cream, blancmange, fruit sauce, fruit pieces, liqueur, alcohol, chocolate, biscuit and cake, however, various migration phenomena occur at the interface, particularly if one of these food components constitutes an aqueous system. Water and the substances dissolved in it, such as colorants and flavourings, migrate with, as a result, a loss of recognisability of the food components and a poorer product perception. Moreover, acid food components such as yoghurt and acid fruit sauce can lead to acid migration to a non-acid component such as custard, with the result that the latter loses the desired sweetness, thickens or even gels. In the case of a combination of custard with a bakery product such as cake or biscuit, the bakery product swells by absorbing moisture from the custard and thereby loses the desired texture, or this even breaks down.

In order to prevent migration of these or other ingredients, it is possible with gelling components to influence the firmness of the layers. US-A-2001/051199 describes, for example, a blancmange consisting of gels of a colloidal oil phase dispersed in an aqueous phase, wherein the different layers contain oil-soluble colorants. With the requirement for gelling, the range of choices for food components is limited.

It is better to use a barrier layer between the constituent components that retards the migration of water and colorants and flavourings over a prolonged period, without affecting the texture and taste of the actual components. Although the coating of desserts with a thin barrier layer is known in the state of the art, these are non-flexible, brittle separation layers such as the chocolate or fat layer described in US-A-2001/018083. Such layers are based on hydrophobic components such as waxes, fats, oils, etc. Owing to their high fat content, these fat-based barriers do not taste good and, in addition, the fats are composed of fats with high melting temperatures. This produces solid and fatty barriers. Moreover, they often contain large amounts of sugar to mask the taste of the fats. Sugar constituents in combination with crystallised fat, but also recrystallising fat, can cause defects in the layer in the form of holes and cracks, as a result of which the separating character of the layer is irrevocably lost.

Coating layers based on a water-in-oil emulsion are described in US 6,395,316 and US 5,958,476 for frozen desserts such as ice cream bars. In both cases the coatings are non-flexible layers with predominantly solid fats that are suitable for such ice cream products as a result of their resistance to melting. For instance, in US 6,395,316 a fat composition is obtained that is solid at up to 20 - 22 °C, while the fat composition in US 5,958,476 has a so-called solid fat content (solid fat content of the fat fraction) of more than 10 % at room temperature, a value corresponding to a solid and brittle fat composition. Moreover, the choice of fats in the description and the examples in both US patents point to even much higher solid fat contents. In US 6,395,316 a fat phase is exemplified that is prepared by mixing coconut oil in amounts of more than 95 wt% with emulsifiers. The use of high amounts of coconut oil, having a melting point above 25 °C, thus contributes to the solid and brittle matter of the coating. The brittleness is further increased by the addition of large quantities of thickeners. In view of the hardness and brittleness of the layer and its susceptibility to defects, this is not suitable as a robust, impenetrable layer for combination desserts with large migration problems.

Similarly, in EP-A-1.488.704 a solid coating is provided to a bagel to prevent moisture migration, wherein the coating is predominantly comprised of one or more C8 to C18 saturated fatty acids. The coating is preferably a stable crystalline structure; large amounts of coconut palm kernel oil are promoted, thus yielding a solid and brittle protective layer.

US 4,952,414 relates to a soft-gelling or thick dairy product such as yoghurt containing crisp cereal pieces. The dry cereal grains absorb moisture over time resulting in a loss of crispness and the development of a soggy texture. The solution given therein is to disperse the crisp pieces in a low fat w/o emulsion matrix whereto a gelling agent such as hydroxypropyl cellulose is added. The gelled oil phase involves large amounts of liquid oils. The emulsion is admixed with the cereal grains, and only then added to the container on top of the yoghurt. The w/o emulsion thus serves as a discrete segregated second portion in contact with an aqueous first phase, rather than a barrier between two unprocessed food components. However, the gelled w/o matrix is only acceptable in preventing sogginess in a composite food product in which the dry solid pieces can be dispersed in such a gel matrix. The gelled matrix finds suitability in connection with high viscosity or thickened foods, but does not give a solution to numerous ungelled composite desserts troubled by moisture migration.

Outside the field of composite dessert applications, US 5,858,445 discloses a process for making a margarine hardstock, wherein the hardstock is a stearin fraction of an interesterified mixture of 25 - 65 % unhardened laruic fat stearin and 75 - 35 % unhardened C16+ fat stearin. There is therefore a need for a robust but flexible, continuous and defect-free barrier layer that can prevent the migration of water, acid, sugar, aromas, colorants and/or flavourings over a prolonged period and which is organoleptically (and/or visually) attractive or is itself not perceptible.

### DESCRIPTION OF THE INVENTION

The invention relates to a dessert comprising a first food component with a water activity of at least 0.7 and a barrier layer that is in contact with the first food component and comprises a water-in-oil emulsion, wherein the amount of oil in the barrier layer is preferably 30 - 90 wt% of the total barrier layer and wherein the barrier layer has a solid fat content (SFC) according to ISO 8292 of less than 10 % at 25 °C, and in particular of less than 5 %. The barrier layer does not take part in any of the food components; it does not alter the different food components present in the dessert but rather separates them from one another.

In one embodiment of the invention the barrier layer is a coating layer that separates the food component from the air. It has been found that such a barrier layer that covers a food component reduces the susceptibility to microbial growth and hence improves the shelf life of this component. The layer according to the invention is free from defects and can be so thin that - if desired - the layer is visually (for example through its colour) and/or organoleptically not perceptible for the consumer. Because of its high level of liquid fats, the layer has good flow properties and good storage properties (no recrystallisation). As a result of its improved texture and flow behaviour and the resulting improved shock resistance, the layer is moreover easy to apply and to process further.

In another embodiment the dessert preferably has a second food component, wherein the barrier layer is situated between the first and the second food component. It has been found that the barrier layer between the two food components is sufficiently firm and free from defects to prevent the migration of water, acid, sugar, aromas, colorants and/or flavourings and, in addition, does not have to be visually or organoleptically perceptible. This prevention of migration is of particular importance if at least one of the food components has a high free water content, because migration occurs most extensively there.

An accepted measure of the amount of free water present in a food component is the water activity or a_{w} value. The a_{w} value can be determined using a hygrometer, the relative humidity of the air around the product being measured when an equilibrium is reached between the food component and the air that is around the food component. The a_{w} value of water at the given temperature is taken as 1 for reference. Because the problems of migration of water and water-soluble constituents occur more extensively with food components with a high water activity, the invention is particularly relevant when the first food component has a water activity of at least 0.7 and more preferably at least 0.75, most preferably at least 0.8 and in particular at least 0.85.

The first food component within the scope of the invention can be blancmange, yoghurt, custard, sweet or sour (fruit) sauce, milk, buttermilk, mousse, liqueur, alcohol, whipped cream, curd cheese, Bavarian cream, crème brulée, compote or any other foodstuff that can be recognised by the consumer as constituent of a dessert as long as this component has the abovementioned high water activity. The first food component is preferably a dairy product, i.e. a product where the constituents consist of at least 50 wt% milk derivatives. The first component is preferably a viscous liquid.

In the embodiment in which the barrier layer separates a first food component from a second food component, the second food component is not limited merely to those food components with a high water activity, but this can comprise any food component that differs from the first food component in water activity, degree of acidity and/or content of colorants and/or flavourings. The barrier layer is particularly useful if the second food component also has a high free water content, preferably a water activity higher than 0.4, more preferably higher than 0.5, most preferably at least 0.6. The barrier layer may also give satisfactory stability in case the water activity differential between two adjacent phases is more than 0.2, more preferably more than 0.3.

Especially if either one of the food components is a neutral dairy phase and the other phase is acidic, preferably having a pH below 4.9, the barrier layer may also prevent gelling of proteinaceous material in the dairy phase. Most preferably the firm barrier layer separates two liquid food components, in particular viscous liquid components, from mixing, where moisture migration is more pronounced.

In another embodiment of the invention the dessert comprises a combination of three or more food components, wherein the layers are separated from one another by means of barrier layers according to the invention. In this respect it is preferable that each barrier layer is adjacent to at least one food component with a high water activity according to the invention. The barrier layers can differ from one another in thickness and/or in composition, depending on whether other physical properties, colour and/or taste are desired.

The following applies to any of the abovementioned embodiments.

Pieces of edible fruit, chocolate, sweets, cake, biscuit or other bakery products can be present in or on the barrier layer, for example for decoration. If they are on the barrier layer, they are in the air or in a food component. These pieces do not form part of the layer, even if they are surrounded by the barrier layer. The constituents and amounts of the pieces are not considered to be part of those of the barrier layer and are present in such amounts and size that they do not affect the barrier properties of the layer.

The dessert can exist in various packaging forms, varying from e.g. catering packs to consumer-size packs. The packaging can have a certain degree of translucency or transparency in order to display possible combinations of food components inside the pack.

The barrier layer according to the invention comprises a water-in-oil emulsion, wherein the amount of oil in the barrier layer is preferably 30 - 80 wt%, more preferably 35-75 wt% and most preferably 40 - 70 wt%, in particular with a maximum of 60 wt%, more particularly at most 50 wt% of the total barrier layer. The oil is preferably contained only in the continuous phase of the emulsion. A lower amount of oil results in unsatisfactory texture properties and can even result in an oil-in-water emulsion. Such a low amount of oil is not suitable for separating food components with a high water activity from other food components. With an excessively high oil content, the layer also loses its attractive texture or firmness.

Oil can also be present in the non-continuous phase in the emulsion, for example in the form of an oil-in-water-in-oil emulsion. The oil that is contained in the aqueous phase is also counted as part of the oil content of the barrier layer. This offers the possibility of achieving a high oil content within the abovementioned limit while maintaining the desired texture properties, because the additional oil in the non-continuous layer barely contributes or does not contribute to the physical characteristics.

The determination of the solid fat content (SFC) according to ISO 8292 (NMR pulse) is a determination of the percentage of solid fats in the oil fraction. The SFC value at 25 °C is preferably lower than 10 %, more preferably lower than 5 % at 25 °C and/or lower than 10 % at 20 °C, most preferably lower than 10 % at 15 °C and/or lower than 15 % at 5 °C and in particular lower than 10 % at 5 °C. The SFC value is preferably lower than 7% at 10 °C.

The SFC value at 25 °C is preferably in the range 0 - 9 %, more preferably 1 - 5 %, most preferably lower than 3.5 %. In other words, the percentage of solid fats in the oil fraction is preferably 0 - 9 wt%, preferably 1 - 5 wt%, more preferably less than 3.5 wt%, calculated on the total fat content and measured at a temperature of 25 °C. Solid fats are solid or semi-solid at this temperature, i.e. in the absence of forces they behave like solids. Solid fats generally have a high content of saturated fatty acids. These fats can be used in the barrier layer according to the invention to give the fmal barrier layer more stability. The amount of solid or crystallised fat in the continuous oil phase must not be high, as this eliminates the favourable flexibility properties and impenetrability of the barrier layer. Particularly if one of the food components is a dairy product, it is preferable to use milk fat, such as butter, as the source of solid fat.

At least 90 wt% of the fats is preferably liquid at 25 °C, preferably 90-100 wt% of the oil fraction. The oil fraction preferably contains 91 - 100 wt%, more preferably 95 - 99 wt% and most preferably more than 96.5 wt% of liquid fats, where "liquid" fats within the scope of the invention are to be understood to be fats or oils that are liquid at 25 °C and/or contain less than 30 % saturated fatty acids. Although such liquid fats are generally referred to as oils, the terms "fat" and "oil" are interchangeable in the present description. Of course, fats are intended to be as edible fats. It is preferable that the melting point of at least 80 wt%, more preferably of more than 90 wt% and most preferably of more than 95 wt%, in particular 96.5 wt% of the total amount of fats is lower than 5 °C.

The liquid fats give the barrier layer its softness and hence flexibility, and moreover a better shelf life compared with the barrier layers of solid fats widely used in the state of the art. Examples of suitable liquid fats are vegetable oils such as olive oil, sunflower oil, soy oil, rapeseed oil, nut oil. Particularly suitable as the source of liquid oils in the barrier layer according to the present invention are a liquid deep-frying and frying oil such as Blue Band Culinesse, which contains 82 gram fat per 100 gram, of which 9 g is saturated fats, and furthermore no proteins and carbohydrates, and Remia Bak en Braad Vloeibaar, which contains 96 wt% fats (at least 60 % polyunsaturated fatty acids). These products further contain small amounts of additives, of which the most important for the invention are the emulsifiers. The amounts of these are counted towards the emulsifier content of the barrier layer.

The emulsion further contains at least one emulsifier, preferably with a low hydrophilic/lipophilic balance (HLB), i.e. the balance between the size and length of the polar group(s) and the non-polar chain(s). Emulsifiers with an HLB between 1 and 6 are particularly suitable for a water-in-oil emulsion according to the invention. The amount of emulsifiers is preferably 0.1 - 5 wt%, more preferably 0.2 - 3 wt%, calculated on the total barrier layer. Any known emulsifier can be used, but the emulsifier is preferably a lecithin, a monoglyceride or diglyceride or a phosphate derivative, a monoglyceride such as hymonos (Quest International), DATA esters (diacetyl tartaric acid ester), lactodans (= glycerol lactic acid ester) or combinations of these. Egg yolk can of course also be used as a source of emulsifier.

The barrier layer preferably also includes sugars. Because the sugars are predominantly absorbed in the discontinuous aqueous phase of the emulsion, the sugars will not have the negative effect known in the state-of-the-art for solid fat layers. As discussed, the sugars in a solid fat layer result in cracks or other defects in this layer due to the absorption of moisture. Should a small proportion of the sugars actually be this oil phase, still no defects as a result of brittle cracking will arise because of the viscous character of the oil phase. The barrier layer according to the invention contains preferably 0-45 wt%, more preferably 10-40 wt%, calculated on the total barrier layer. In particular, the layer contains more than 15 wt%, more particularly more than 25 wt% sugars, as this has a positive effect on the taste of the barrier layer.

Examples of sugars that can be used are sucrose, lactose, maltose, galactose, fructose and/or glucose, or sources thereof. Sugar substitutes such as sorbitol, sucralose, trehalose, aspartame and acesulfam can also be used. The amount of sugar substitutes is converted to the corresponding sucrose content on the basis of the relative sweetness and this corresponding sucrose content is included in the sugar content according to the invention.

It is preferable to add at least part of the sugar in the form of fondant or powdered sugar. A fondant is a sugar syrup made from water, sugars and glucose that is boiled for a certain time to prevent crystallisation of the sugars. Examples of suitable sugars have been mentioned above. The exact conditions and mixing ratios for making fondant are known to a person skilled in the art. Preferably a fondant is used that contains 70 - 90wt % of sugar (including glucose) and 10 - 30 wt% water.

The barrier layer preferably contains 10 - 60 wt% water, preferably up to 55 wt% , more preferably less than 30 wt% and most preferably less than 20 wt%, calculated on the total barrier layer. The aqueous phase can comprise milk, yoghurt, buttermilk or any other liquid, watery food component.

The aqueous phase can also contain additives, such as colorants and/or flavourings. Although the barrier layer is intended first and foremost to separate a food component from air or from another food component, preferably from another food component, without changing the organoleptic and/or visual characteristics of the product or the products, the barrier layer according to the invention can also contain colorants and/or flavourings, if desired.

The barrier layer is preferably low in gelling agents, such as gelatine, xanthan, alginates, locust bean, guar, carboxymethyl cellulose, hydroxypropyl cellulose, hydroxypropylmethyl cellulose, fumed silicon dioxide and pectin. Preferably the concentration of these gelling agents is less than 0.1 wt% in the aqueous phase, more preferably these hydrocolloids and other gelling agents are not added to the barrier layer at all.

It has been found that a continuous and defect-free barrier layer is already obtained if this has a thickness of at least 0.5 mm. If the barrier properties do not have to make any other contribution to the dessert than the impenetrability, the layer will have an average thickness that is preferably less than 5 mm, more preferably less than 4 mm and most preferably less than 3 mm, in particular is less than 2 mm. In an embodiment in which it is desirable that the barrier layer does make an organoleptic and/or visual contribution to the product, the maximum thickness will not be a limiting factor. In that case the thickness can be as high as, for example, 10 mm or even 20 mm.

Furthermore, the barrier layer according to the invention has a texture value that lies between 100 and 2000 gram, more preferably between 200 and 1700 gram, most preferably of less than 1100 gram and in all cases noticeably lower than the texture value of about 17000 gram as is usual for a barrier layer based on a high content of solid fats (for example on the basis of butter). The texture value is a measure of the firmness of the layer; the higher the texture value, the firmer the layer and the higher the chance of shrinkage and brittleness. As a first approximation, the texture value of a barrier layer correlates well with the SFC according to a power law correlation with a scaling exponent of 2, as evidenced in the examples. These correlations are more frequently found for dispersions in which the structure is predominantly determined by the solid fat fraction.

However, the skilled person may determine the texture values more exactly using the following recipe: a 125 ml beaker with a diameter of 95 mm is filled to the stacking rim with the composition of the barrier layer and then a cylinder with a diameter of 38 mm and a height of 20 mm is pressed to a depth of 10 mm into the specimen at a speed of 2 mm/s in a TA-XT2 (Stable Micro Systems, Surrey, Great Britain). The texture value is the resistance encountered by the cylinder after 10 mm, expressed in gram.

The barrier layer can be beaten to obtain an aerated barrier layer, so that it contains less fats, which is particularly advantageous for low-calorie applications, without losing the uninterrupted and defect-free character. The overrun of a beaten layer can lie between 1 and 50 %, preferably between 10 and 40 %, most preferably between 20 and 30 %, the overrun being defined as the density of the unbeaten product minus the density of the beaten product, divided by the density of the beaten product, and this figure multiplied by 100 %. In practice the overrun percentage in the layer can be determined by determining the density of the layer before and after heating. By heating, the air is removed from the layer and a measure for the unbeaten layer can be obtained. Preferably the beaten layer contains 1 - 50 vol%, more preferably 10-40 vol% and most preferably 20 - 30 vol% air, based on the total volume of the barrier layer. The degree of beatability is also dictated by the demands made on the flow properties of the layer during the preparation and further processing steps.

The barrier layer and a dessert according to the invention are preferably structurally and microbiologically stable at ambient temperature for a period of at least 4 weeks, more preferably for a period of more than 8 weeks.

The invention also relates to a container that contains a dessert with two or more food components and a barrier layer, wherein the barrier layer is situated at the interface between the food components. The dessert preferably comprises two or more layers of food components, preferably two layers of food components, having a barrier layer in between these layers. The barrier layer can be oriented horizontally, vertically or diagonally with respect to the bottom of the container. Preferably the barrier layer is essentially horizontal or vertical with respect to the bottom of the container.

The container according to the invention can be any form of pack such as is normal for desserts for caterers and/or consumers. In this respect the container can have a certain degree of translucency or transparency in order to display the combinations of food components in the pack.

The invention also relates to a water-in-oil emulsion that is suitable for use as a barrier layer according to the invention, wherein the water-in-oil emulsion comprises 30 - 90 wt% oil, 10 - 60 wt% water and 0 - 45 wt% sugar, the water-in-oil emulsion having a solid fat content (SFC) value at 25 °C according to ISO 8292 of less than 10 %. Preferably the water-in-oil emulsion has a texture value between 100 and 2000 gram. The other characteristics of the water-in-oil emulsion are the same as those described above for the barrier layer that can be produced therefrom. As mentioned above, an oil-in-water-in-oil emulsion can also be used instead of a water-in-oil emulsion.

The invention also relates to a method for the preparation of a packed dessert that comprises a first food component and a barrier layer, wherein the first food component is put into a container and a water-in-oil emulsion is brought into contact with the first food component. The water-in-oil emulsion thus forms a barrier layer. Optionally a second food component can be brought into contact with the barrier layer.

The food component(s) and water-in-oil emulsion can be put into the container using filling techniques that are customary in the state of the art. If the barrier layer has to be so thin that it is imperceptible organoleptically and/or visually, spraying techniques can be employed, while in other cases pouring may suffice.

If the food components and the barrier layer are put into the pack in separate filling steps, each filling step can be immediately preceded by a freezing step, wherein at least the exposed part is frozen in the container, for example by briefly blowing liquid nitrogen onto it. Determination of the precise conditions forms part of the normal work of a person skilled in the art. It is preferable to freeze the surface of the barrier layer immediately before introducing a subsequent food component into the container.

It is also possible to perform the operation in such a way that the food components and the barrier layer are put into the container at the same time, for example by simultaneously pouring from separate supply lines. It is also possible to link the supply lines together and to turn them on their axis, so that the food components with the barrier layer between them are filled into the container in the reverse order. The speed of filling is adapted to the time that is necessary for the barrier layer to form a defect-free continuous layer. This is dependent inter alia on the flow properties and the texture of the layer.

### EXAMPLES

### Example 1- Preparation of the barrier layer

Five barrier layers were prepared as follows: 80 gram Dip neutraal with a composition of 55 wt% fat and 43 wt% sugar (Zeelandia, Zierikzee, NL) and 200 gram Fondant KK with a composition of 84 wt% sugar and 16 wt% water (Zeelandia, Zierikzee, NL) were mixed. Different mixtures of Blue Band Culinesse (composition: 82 wt% fat and 17 wt% water; Unilever Bestfoods Rotterdam, NL) and water were added to this while stirring until a water-in-oil emulsion was obtained. The precise quantities of water and Blue Band Culinesse, and the total amount of fat, water and sugar in the compositions are presented in Table 1.

The five compositions were filled into a 0.5 litre beaker (diameter 95 mm) and then stored at 5 °C for one week. After this, the firmness was measured using a Texture Analyser TA-XT2 (Stable Micro Systems, Surrey, Great Britain) and the barrier layer was assessed for texture in the mouth and for taste. The results are also presented in Table 1. The solid fat content is the content of solid fats in the total composition, calculated on the basis of the SFC value. The mass percentages in this table are with respect to the mass of the total composition.

In addition, the overrun was determined by taking the weight of the unbeaten layer before beating, the beating the layer using a Hobart N-50 mixer and then taking the weight of the layer again.

### Example 2 - Filling of a dessert with barrier layer

A thin layer of approx. 0.5 cm of caramel sauce, chocolate sauce or a fruit preparation was filled into a portioning beaker (150 ml, 95 mm diameter). A thin layer of 0.5 cm of one of the barrier layers prepared as in Example 1 was applied to this layer. A layer of approx. 4 cm of fresh vanilla custard (Campina, The Netherlands) was then applied on top of this. This product was then stored for 1 week at 5 °C. After this, the product was assessed visually as to whether the barrier layer had functioned correctly and had prevented migration phenomena between the lower and upper product layers.

**Table 1: Effect of oil and water content on properties of the barrier layer**

| | 1 | 2 | 3 | 4 | 5 |
|---|---|---|---|---|---|
| Dip neutraal (g) | 80 | 80 | 80 | 80 | 80 |
| Fondant KK (g) | 200 | 200 | 200 | 200 | 200 |
| Water (g) | 0 | 13 | 37 | 61 | 81 |
| Blue Band Culinesse (g) | 200 | 187 | 163 | 139 | 119 |
| wt% fat | 43.4 | 41.2 | 37.1 | 33.0 | 28.4 |
| SFC at 5 °C (%) | 8.5 | 8.9 | 9.8 | 10.9 | 12.0 |
| SFC at 25 °C (%) | 2.8 | 3.1 | 3.5 | 3.8 | 4.2 |
| wt% water | 13.5 | 15.7 | 19.9 | 24.1 | 30.5 |
| wt% sugar | 42.1 | 42.1 | 42.1 | 42.1 | 40.5 |
| wt% water + sugar | 55.6 | 57.9 | 62.1 | 66.2 | 70.9 |
| | | | | | |
| Texture at 5 °C (g) | 537 | 755 | 1015 | 1391 | 1711 |
| Overrun (%) | 29 | 27 | 13 | 2 | 1 |
| Texture in the mouth | 3 | 3.5 | 3 | 1 | 1 |
| Taste | 5 | 5 | 5 | 5 | 5 |
| Barrier function | 4 | 5 | 5 | 5 | 5 |

| | | | | | |
|---|---|---|---|---|---|
| 1 = Poor, 2 = Unsatisfactory, 3 = Reasonable, 4 = Good, 5 = Excellent | | | | | |

The results given in Table 1 show that the barrier properties with a fat content of 28-44 wt% and a water content of 14 - 31 wt% are still good. However, the texture in the mouth is unsatisfactory with water contents higher than 20 wt% and fat contents lower than 37 wt%. The texture also becomes too firm (with increased risk of shrinkage and/or brittleness) and the overrun percentage lower with increasing water contents and lower fat contents.

### Example 3 - Barrier layer with varying sugar contents

In order to investigate the influence of the sugar content, four samples were made with decreasing sugar content. For this purpose, the method according to Example 1 was followed, but in this case the Dip neutraal (that contains 43 % sugar) and Fondant KK (that contains 84 % sugar) were replaced by butter (Campina, The Netherlands; composition: 82 wt% fat, 16 wt% water) and sugar as given in Table 2.

**Table 2: Effect of sugar content on properties of the barrier layer**

| | 1 | 6 | 7 | 8 | 9 |
|---|---|---|---|---|---|
| Dip neutraal (g) | 80 | | | | |
| Fondant KK (g) | 200 | | | | |
| Butter (g) | | 80 | 80 | 80 | 80 |
| Sugar (g) | | 220.6 | 157.6 | 78.8 | 26.3 |
| Water (g) | | 24.7 | 87.7 | 166.5 | 219.1 |
| Blue Band Culinesse (g) | 200 | 200 | 200 | 200 | 200 |
| wt% fat | 43.4 | 43.4 | 43.4 | 43.4 | 43.4 |
| SFC at 5 °C (%) | 8.5 | 13.1 | 13.1 | 13.1 | 13.1 |
| SFC at 25 °C (%) | 2.8 | 3.4 | 3.4 | 3.4 | 3.4 |
| wt% water | 13.5 | 14.0 | 26.0 | 41.0 | 51.0 |
| wt% sugar | 42.1 | 42.0 | 30.0 | 15.0 | 5.0 |
| wt% water + sugar | 55.6 | 56.0 | 56.0 | 56.0 | 56.0 |
| | | | | | |
| Texture at 5 °C (g) | 537 | 1663 | 1343 | 1319 | 726 |
| Overrun (%) | 29 | 43 | 26 | 34 | 46 |
| Texture in the mouth | 3 | 4 | 5 | 5 | 5 |
| Taste | 5 | 5 | 3 | 2 | 1 |
| Barrier function | 4 | 5 | 5 | 5 | 5 |

| | | | | | |
|---|---|---|---|---|---|
| 1 = Poor, 2 = Unsatisfactory, 3 = Reasonable, 4 = Good, 5 = Excellent | | | | | |

Here again, different barrier compositions were produced in the manner described for Example 1 and tested using the method described in a dessert as prepared in Example 2. The results are presented in Table 2 and compared in addition with the barrier layer composition 1 as prepared in Example 1. The mass percentages have been calculated on the basis of the total composition.

This table shows that the compositions based on butter were much firmer because of the higher solid fat content, while texture in the mouth and barrier properties still remained outstanding. With decreasing sugar content the barrier layer still appeared to function well, but the taste deteriorated noticeably. An overrun percentage up to almost 50 was possible without the barrier function being negatively influenced.

### Comparison example 1- Barrier layer based on butter

A composition based on a water-in-oil emulsion was prepared in the manner described in Example 1 by mixing Dip neutraal, fondant and water just with butter. The properties of the composition 10 thus obtained were compared with those of composition 1, where Blue Band Culinesse was used as fat source. Furthermore, the two compositions contained nearly the same amounts of fat, water and sugar, but differed in their SFC value.

The results of a texture test, as it was determined according to the conditions described in Example 1, are also presented in the same Table 3.

**Table 3: Effect of solid fat content on properties of the barrier layer**

| | 1 | 10 |
|---|---|---|
| Dip neutraal (g) | 80 | 80 |
| Fondant KK (g) | 200 | 200 |
| Butter (g) | 0 | 200 |
| Water (g) | 0 | 0 |
| Blue Band Culinesse (g) | 200 | 0 |
| wt% fat | 43.4 | 43.4 |
| SFC at 5 °C (%) | 8.5 | 41.4 |
| SFC at 25 °C (%) | 2.8 | 11.5 |
| wt% water | 13.5 | 13.5 |
| wt% sugar | 42.1 | 42.1 |
| wt% water + sugar | 55.6 | 55.6 |
| | | |
| Texture at 5 °C (g) | 537 | 17000 |

The higher SFC value resulted in a far higher texture value for composition 10, and thus increased the risk of splitting. A barrier layer made from composition 10 had a disadvantageously high risk of brittleness and shrinkage, as a result of which the barrier function can be lost.

The texture values and SFC values of compositions 1 - 6 and 10 have been summarised in Table 4. The texture value correlates well with the SFC according to a power law correlation with a scaling exponent of 2. These correlations are more frequently found for dispersions in which the structure is predominantly determined by the solid fat fraction (e.g. W. Kloek (1998), Ph.D. Thesis, Wageningen Agricultural University, Crystallisation of fats in relation to their mechanical properties).

**Table 4**

| Composition | SFC | Texture |
|---|---|---|
| 1 | 8.5 | 537 |
| 2 | 8.9 | 755 |
| 3 | 9.8 | 1015 |
| 4 | 10.9 | 1391 |
| 5 | 12.0 | 1711 |
| 6 | 13.1 | 1663 |
| 10 | 41.4 | 17000 |

| | | |
|---|---|---|
| Texture = 8.9603 * SFC^{2.0434} R² = 0.9807 | | |

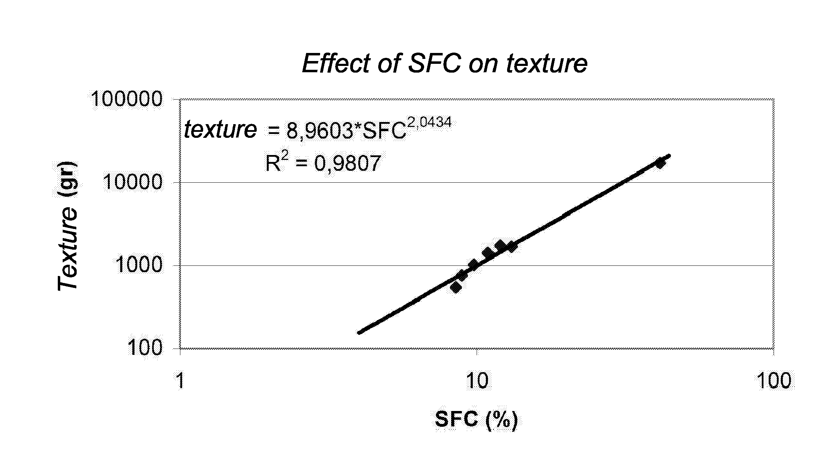

The correlation is shown graphically in the appended figure.

## Claims

1. Dessert comprising a first food component with a water activity of at least 0.7 and a barrier layer that comprises a water-in-oil emulsion and is in contact with the first food component, wherein the barrier layer has a solid fat content (SFC) value according to ISO 8292 of less than 5 % at 25 °C.

2. Dessert according to claim 1, wherein the barrier layer is aerated and contains 10 - 50 vol% air, based on the total volume of the barrier layer.

3. Dessert according to claim 1 or 2, containing a second food component, wherein the barrier layer is situated between the first and the second food component.

4. Dessert according to claim 3, wherein said second food component has a water activity higher than 0.4.

5. Dessert according to claim 3 or 4, wherein said first and second food component are in viscous liquid form.

6. Dessert according to any one of the preceding claims, wherein the first food component is a dairy product.

7. Dessert according to one of the preceding claims, wherein the barrier layer contains 10 - 45 wt% sugars calculated on the total barrier layer.

8. Dessert according to one of the preceding claims, wherein the barrier layer has a texture value between 100 and 2000 gram.

9. Container containing a dessert according to one of the preceding claims, wherein the dessert comprises two or more layers of food components having a barrier layer in between said layers, wherein the barrier layer is essentially situated horizontally or vertically with respect to the bottom of the container.

10. Water-in-oil emulsion for use in a dessert according to any one of claims 1 - 8, containing 30 - 90 wt% oil, 10 - 60 wt% water and 0 - 45 wt% sugars, wherein the emulsion has a solid fat content (SFC) value according to ISO 8292 of less than 5 % at 25 °C and has an SFC of less than 15 % at 5 °C and wherein the water-in-oil emulsion has a texture value that is between 100 and 2000 gram.

11. Method for the preparation of a packed dessert that comprises a first food component and a barrier layer, wherein the first food component is put into a container and a water-in-oil emulsion is brought into contact with the first food component.

12. Method according to claim 11, wherein a second food component is brought into contact with the barrier layer.
